(19) Europäisches Patentamt European Patent Office Office européen des brevets

(11) **EP 4 752 955 A1**

(12) **EUROPEAN PATENT APPLICATION**

(43) Date of publication:
03.06.2026 Bulletin 2026/23

(21) Application number: 25219184.6

(22) Date of filing: 27.11.2025

(51) International Patent Classification (IPC):
*H01M 4/133* (2010.01)      *H01M 4/134* (2010.01)
*H01M 4/1393* (2010.01)      *H01M 4/1395* (2010.01)
*H01M 4/36* (2006.01)      *H01M 4/38* (2006.01)

(52) Cooperative Patent Classification (CPC):
H01M 4/133; H01M 4/134; H01M 4/1393;
H01M 4/1395; H01M 4/364; H01M 4/386;
H01M 2004/021; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.11.2024  KR 20240175700
29.11.2024  KR 20240175704

(71) Applicant: SAMSUNG SDI CO., LTD.
Yongin-si, Gyeonggi-do 17084 (KR)

(72) Inventors:
• OH, Se Young
16678 Suwon-si, Gyeonggi-do (KR)
• CHA, Yu Rim
16678 Suwon-si, Gyeonggi-do (KR)
• CHO, Hang In
16678 Suwon-si, Gyeonggi-do (KR)
• YU, So Jeong
16678 Suwon-si, Gyeonggi-do (KR)
• MOON, Joong Ho
16678 Suwon-si, Gyeonggi-do (KR)

(74) Representative: Michalski Hüttermann & Partner
Patentanwälte mbB
Kaistraße 16A
40221 Düsseldorf (DE)

(54) **NEGATIVE ELECTRODE PLATE FOR RECHARGEABLE LITHIUM BATTERY AND RECHARGEABLE LITHIUM BATTERY INCLUDING THE SAME**

(57) The present invention relates to a negative electrode plate for a rechargeable lithium battery and a rechargeable lithium battery including the same, wherein the negative electrode plate includes a negative electrode active material that includes a mixture of a first negative electrode active material, a second negative electrode active material, and a third negative electrode active material, the first negative electrode active material includes natural graphite including secondary particles in which primary particles are assembled and an amorphous carbon coating layer containing amorphous carbon and surrounding the secondary particles, and has an orientation degree of 90 or less and a d002 value of 3.356 Å to 3.360 Å, the second negative electrode active material is artificial graphite, and the third negative electrode active material includes a composite of silicon and crystalline carbon; and an amorphous carbon coating layer containing amorphous carbon and formed on the surface of the composite.

FIG 7.

**Description**

**CROSS-REFERENCE TO RELATED APPLICATIONS**

The present application claims priority to Korean Patent Application No.10-2024-0175700, filed on November 29, 2024 in the Korean Intellectual Property Office, and Korean Patent Application No.10-2024-0175704, filed on November 29, 2024 in the Korean Intellectual Property Office.

**BACKGROUND**

**1. Field**

Aspects of embodiments of the present disclosure relate to a negative electrode plate for a rechargeable lithium battery and a rechargeable lithium battery including the same.

**2. Discussion of Related Art**

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contain an active material capable of the intercalation and deintercalation of lithium ions and produces electric energy by oxidation and reduction reactions when the lithium ions are intercalated into and deintercalated from the positive electrode and the negative electrode.

**SUMMARY**

According to an aspect of embodiments of the present invention, a negative electrode plate for a rechargeable lithium battery that exhibits high energy density, boost charging, and long lifetime characteristics is provided.

According to another aspect of embodiments of the present invention, a negative electrode plate for a rechargeable lithium battery that exhibits reduced swelling of silicon-based active materials, a shortened boost charging time, a long lifetime, and high energy density is provided.

According to another aspect of embodiments of the present invention, a rechargeable lithium battery including the above-described negative electrode plate is provided.

According to one or more embodiments of the present invention, a negative electrode plate for a rechargeable lithium battery includes a negative electrode active material that includes a mixture of a first negative electrode active material, a second negative electrode active material, and a third negative electrode active material, wherein the first negative electrode active material includes natural graphite including secondary particles in which primary particles are assembled; and an amorphous carbon coating layer containing amorphous carbon and surrounding the secondary particles, and has an orientation degree of 90 or less and a d002 value of 3.356Å to 3.360Å, the second negative electrode active material is artificial graphite, and the third negative electrode active material includes a composite of silicon and crystalline carbon; and an amorphous carbon coating layer containing amorphous carbon and formed on the surface of the composite.

According to one or more embodiments of the present invention, a rechargeable lithium battery includes the above-described negative electrode plate for a rechargeable lithium battery, and a positive electrode.

**BRIEF DESCRIPTION OF THE DRAWINGS**

The above and other aspects, objects, features, and advantages of the present invention will become more apparent to those of ordinary skill in the art by describing some embodiments thereof in further detail with reference to the accompanying drawings, in which:

FIG. 1 is a conceptual diagram of a first negative electrode active material according to an embodiment;
FIG. 2 is a conceptual diagram of a third negative electrode active material according to an embodiment;
FIGS. 3 to 6 are cross-sectional views schematically showing rechargeable lithium batteries according to embodiments of the present invention; and
FIG. 7 shows scanning electron microscope (SEM) evaluation results of a negative electrode plate according to an embodiment.

## DETAILED DESCRIPTION

Herein, some embodiments of the present invention will be described in further detail. However, the embodiments are presented as examples, and the present invention is not limited thereto, and the present invention is to be defined by the scope of the claims.

Unless otherwise specified herein, when a part, such as a layer, a film, an area, a plate, etc., is said to be "on" another part, it includes not only a case in which the part is "directly on" the other part, but also a case in which one or more other parts are present therebetween.

Unless otherwise specified herein, the singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle diameter. In addition, the particle size refers to the average size diameter (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle size (D50) value may be obtained by performing data analysis, counting the number of particles in each particle size range, and then calculating the D50 value therefrom. Alternatively, the average particle size may be measured using a laser diffraction method. When measuring the average particle size by the laser diffraction method, more specifically, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

When the particle is spherical, the size may mean a diameter.

The negative electrode plate for a rechargeable lithium battery according to an embodiment may provide low resistance, high energy density, and boost charging effects.

The negative electrode plate for a rechargeable lithium battery according to an embodiment includes a negative electrode active material including a mixture of a first negative electrode active material, a second negative electrode active material, and a third negative electrode active material, wherein the first negative electrode active material includes natural graphite including secondary particles formed by the assembly of primary particles; and an amorphous carbon coating layer containing amorphous carbon and surrounding the secondary particles, and has an orientation degree of 90 or less and a d002 value of 3.356 Å to 3.360 Å, the second negative electrode active material includes or is artificial graphite, and the third negative electrode active material includes a composite of silicon and crystalline carbon; and an amorphous carbon coating layer containing amorphous carbon and formed on a surface of the composite.

The negative electrode plate for a rechargeable lithium battery may provide a high capacity retention rate, high energy density, boost charging, and fast-charging lifetime improvement by including the above mixture as a negative electrode active material.

In an embodiment, the mixture may be included in an amount of 95 wt% or more, for example, 95 to 100 wt%, 99 to 100 wt%, or 100 wt%, of the total negative electrode active material in the negative electrode plate. Within this range, the effects of the negative electrode plate may be easily achieved.

In an embodiment, the negative electrode active material, for example, the mixture, may be included in an amount of 90 to 99 wt% of the negative electrode plate. Within this range, an improvement in capacity may be achieved.

If the first negative electrode active material is not included in the mixture, the electrode plate density may decrease, making it difficult to achieve high-energy density cells and diminishing the boost charging effects.

If the second negative electrode active material is not included in the mixture, long lifetime characteristics in high-temperature environments may deteriorate.

If the third negative electrode active material is not included in the mixture, the increase in capacity per volume may be reduced.

In an embodiment, the mixture may include the first negative electrode active material in an amount of 20 to 75 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65 wt%, or 20 to 60 wt%, the second negative electrode active material in an amount of 20 to 75 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75 wt%, and, in an embodiment, 20 to 65 wt%, or 20 to 60 wt%, and the third negative electrode active material in an amount of 1 to 20 wt%, for example, 1, 2, 3, 4, 5, 6, 7, 8, 9, 10, 11, 12, 13, 14, 15, 16, 17, 18, 19, or 20 wt%, and, in an embodiment, 1 to 15 wt%, 1 to 14 wt%, 1 to 10 wt%, or 5 to 7 wt%. Within this range, the mixture may easily achieve high energy density, exhibit boost charging effects, and improve the lifetime under fast charging conditions.

In an embodiment, the total amount of the first and second negative electrode active materials may be 85 to 99 wt%, for example, 85, 86, 87, 88, 89, 90, 91, 92, 93, 94, 95, 96, 97, 98, or 99 wt%, and, in an embodiment, 86 to 99 wt%, or 90 to 99 wt%, and the third negative electrode active material may be included in an amount of 1 to 15 wt%, for example, 1, 2, 3, 4, 5, 6, 7, 8, 9, 10, 11, 12, 13, 14, or 15 wt%, and, in an embodiment, 1 to 14 wt%, or 1 to 10 wt%. Within this range, boost charging and fast-charging lifetime improvement effects may be achieved.

In an embodiment, the third negative electrode active material may have a specific capacity of 500 mAh/g or less.

In an embodiment, based on the total of 100 parts by weight of the first and second negative electrode active materials, the weight ratio of the first negative electrode active material to the second negative electrode active material may be 10:90 to 90:10, for example, 25:75 to 75:25, 40:60 to 60:40, or 50:50. Within this range, boost charging and fast-charging lifetime improvement effects may be further enhanced.

In an embodiment, the negative electrode plate may have a density of 1.3 to 1.7 g/cc, for example, 1.3 to 1.68 g/cc. Within this range, high energy density and boost charging may be easily achieved.

Herein, each component in the negative electrode active material will be described in further detail.

The first negative electrode active material includes natural graphite including secondary particles formed by the assembly of primary particles, and a coating layer containing amorphous carbon and surrounding the secondary particles. In an embodiment, the first negative electrode active material has an orientation degree of 90 or less and a d002 of 3.356 Å to 3.360 Å.

In this specification, "orientation degree" may refer to the ratio of the diffraction peak intensity of the (002) plane [I(002)] to that of the (110) plane [I(110)], as measured by X-ray diffraction analysis using Cu $\alpha$ radiation and is expressed as I(002)/I(110).

In this specification, "d002" may refer to the interplanar spacing of the (002) plane for the first negative electrode active material, as measured by X-ray diffraction analysis using Cu $\alpha$ radiation.

Generally, natural graphite has advantages as a negative electrode active material for batteries, but a high resistance thereof may lead to poor charging characteristics, and an internal porosity thereof may cause side reactions, negatively impacting long-term durability and the expansion rate.

The first negative electrode active material addresses this by significantly reducing the average particle diameter of secondary particles of natural graphite into a fine particulate form, thereby effectively lowering resistance. To offset efficiency reduction caused by the increased specific surface area of the secondary particles, the first negative electrode active material is calcined at a temperature described below, thereby reducing the specific surface area while providing high efficiency.

In an embodiment, the first negative electrode active material includes the natural graphite, the amorphous carbon, and the coating layer, and satisfies the orientation degree and d002 described above. Thus, the first negative electrode active material may enhance battery capacity and significantly improve the charge C-rate characteristics, thereby enhancing the fast-charging performance of rechargeable lithium batteries. Although the first negative electrode active material includes natural graphite, the first negative electrode active material may significantly reduce resistance and provide effects of high energy density, suppression of side reactions with the electrolyte, and improved lifetime.

A lower orientation degree results in a more random alignment of edge planes in natural graphite, which increases the disordered orientation of the first negative electrode active material. This facilitates the intercalation and deintercalation of lithium ions into/from the secondary particles of natural graphite, thereby improving the capacity characteristics of rechargeable lithium batteries using the same. In an embodiment, for example, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80, and, in an embodiment, 10 to 80, 20 to 80, 30 to 80, 40 to 80, or 50 to 80. The orientation degree may be realized by adjusting the average particle diameter (D50) of the secondary particles and the major axis length of the primary particles. The first negative electrode active material significantly reduces the average particle diameter (D50) of the secondary particles to address the high resistance of natural graphite.

In an embodiment, as described below, the D50 of the secondary particles in the first negative electrode active material is substantially smaller than the major axis length of the primary particles. In an embodiment, the secondary particles are formed by crumpling the primary particles. In an embodiment, the first negative electrode active material includes amorphous carbon and may achieve a high graphitization degree by being prepared through heat treatment at 2500 °C or higher, as described below. This high degree of graphitization may enhance the capacity of the negative electrode active material while mitigating the efficiency reduction due to the reduced average secondary particle size (D50) and the increased specific surface area. In an embodiment, the first negative electrode active material has a d002 value of 3.356 Å to 3.360 Å. Within this range, the first negative electrode active material, which includes secondary particles with a relatively small average particle diameter (D50), may offset the battery efficiency reduction due to the increased specific surface area, thereby achieving high capacity. In an embodiment, for example, the d002 may be 3.356, 3.3561, 3.3562, 3.3563, 3.3564, 3.3565, 3.3566, 3.3567, 3.3568, 3.3569, 3.357, 3.3571, 3.3572, 3.3573, 3.3574, 3.3575, 3.3576, 3.3577, 3.3578, 3.3579, 3.358, 3.3581, 3.3582, 3.3583, 3.3584, 3.3585, 3.3586, 3.3587, 3.3588, 3.3589, 3.359, 3.3591, 3.3592, 3.3593, 3.3594, 3.3595, 3.3596, 3.3597, 3.3598, 3.3599, or 3.360Å.

According to an embodiment, the first negative electrode active material may have a mercury (Hg) cumulative pore volume of 0.01 to 0.06 mL/g, for example, 0.01, 0.02, 0.03, 0.04, 0.05, or 0.06 mL/g, and, in an embodiment, 0.02 to 0.06 mL/g, or 0.03 to 0.06 mL/g. Within this range, the first negative electrode active material has minimal internal pores, i.e., empty spaces, and an appropriate amorphous carbon content, resulting in excellent efficiency of the negative electrode active material. Additionally, the first negative electrode active material may maintain optimal density to enable effective electrolyte impregnation while controlling the area reacting with the electrolyte to non-excessive levels, thereby suppressing side reactions and ensuring a sufficient lifetime. The Hg cumulative pore volume may be a feature of the negative electrode active material, which includes finely ground natural graphite and is prepared by the preparation method described below to minimize or reduce the specific surface area.

In an embodiment, the first negative electrode active material may have a sphericity (S) of 0.85 or more, as defined by Equation 1 below:

$$\text{Equation 1}$$

$$\text{Sphericity (S)} = 4\pi \times A/B^2,$$

where A is the area of the first negative electrode active material, and B is the perimeter of the first negative electrode active material's shape.

In an embodiment, B may refer to the perimeter of the actual particle shape of the first negative electrode active material.

The sphericity of the first negative electrode active material may be determined by projecting the three-dimensional particle onto a two-dimensional plane. For example, the sphericity may be defined as the ratio of the circumference of a circle with the same area as the projected particle to the actual perimeter of the particle boundary.

In Equation 1, the area A is calculated by acquiring a cross-sectional SEM image of the electrode using a controlled pressure scanning electron microscope (CP-SEM) and measuring the actual perimeter B of the particle's boundary through ImageJ software using the cross-sectional image. The area A refers to the area of a circle with a perimeter equal to B. In an embodiment, B may represent the total length measured along the particle's boundary, regardless of whether the shape is perfectly spherical or non-spherical with surface irregularities.

In an embodiment, the first negative electrode active material may have a sphericity of 0.85, 0.86, 0.87, 0.88, 0.89, 0.90, 0.91, 0.92, 0.93, 0.94, 0.95, 0.96, 0.97, 0.98, 0.99, or 1.0, and, in an embodiment, 0.90 to 1.0, 0.90 to 0.98, or 0.90 to 0.95. When the sphericity is within this range, expansion during charge/discharge cycles may be effectively suppressed.

In an embodiment, the first negative electrode active material may have a pellet density of 1.60 to 1.80 g/cc. Within this range, the first negative electrode active material may exhibit reduced internal voids and suppressed side reactions with the electrolyte, thereby improving lifetime characteristics. In an embodiment, for example, the pellet density may be 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, or 1.80 g/cc, and, in an embodiment, 1.70 to 1.80 g/cc.

In an embodiment, the first negative electrode active material may have a tap density of 0.75 to 1.20 g/cc, for example, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, or 1.20 g/cc, and, in an embodiment, 0.75 to 1.0 g/cc, or 0.95 to 1.20 g/cc. Within this range, the first negative electrode active material may exhibit reduced internal voids and suppressed side reactions with the electrolyte, thereby improving lifetime characteristics. The tap density is measured using a GeoPyc 1360 Pycnometer from Micromeritics equipped with a chamber of 19.1 mm diameter and having a conversion factor of 0.2907 cm$^3$/mm. The process involves applying a pressure of 108 N three times and calculating the average of the results.

In an embodiment, the first negative electrode active material may have a specific surface area of 10 m$^2$/g or less, for example, 1, 1.5, 2, 2.5, 3, 3.5, 4, 4.5, 5, 5.5, 6, 6.5, 7, 7.5, 8, 8.5, 9, 9.5, or 10 m$^2$/g, and, in an embodiment, 1 to 10 m$^2$/g. Within this range, the first negative electrode active material may exhibit reduced internal voids and suppressed side reactions with the electrolyte, thereby improving lifetime characteristics. The specific surface area may be the BET specific surface area.

In an embodiment, the first negative electrode active material may have an internal porosity of 2% or less, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2%, and, in an embodiment, 1.8% or less, 1.5% or less, 1.0 to 1.5%, or 1.0 to 1.3%. Within this range, side reactions between the first negative electrode active material and the electrolyte may be suppressed, thereby improving the lifetime of the rechargeable lithium battery.

The total pore volume and mesopore volume within the porosity may be quantitatively measured using Barrett-Joyner-Halenda (BJH) analysis.

Herein, the composition of the first negative electrode active material is described in further detail.

The first negative electrode active material includes natural graphite including secondary particles in which primary particles are assembled; and a coating layer containing amorphous carbon and surrounding the secondary particles.

The natural graphite may be flaky, or flake-shaped (e.g., scale-shaped).

In an embodiment, the primary particles may have a major axis length of 10 to 200 $\mu$m, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200 $\mu$m, and, in an embodiment, 10 to 100 $\mu$m, 30 to 60 $\mu$m, or 20 to 50 $\mu$m. Within this range, the assembly into secondary particles is easy, and the target ratio described below may be easily achieved.

When the primary particles are plate-shaped, the "major axis length" refers to the length of the longest axis between two opposing surfaces.

In a specific example, the primary particles may be plate-shaped, but are not limited thereto.

In an embodiment, the secondary particles may have an average particle diameter (D50) of 30 $\mu$m or less. Within this range, the target ratios described below may be easily achieved. In an embodiment, for example, the secondary particles may have an average particle diameter (D50) of 5 $\mu$m or more and 10 $\mu$m or less, for example 5, 6, 7, 8, 9, or 10 $\mu$m, and, in an embodiment, 6 $\mu$m or more and less than 8 $\mu$m. Within this range, the above-described orientation degree and sphericity may be easily achieved.

The secondary particles may be spherical, but are not limited thereto.

In an embodiment, the ratio of the major axis length of the primary particles to the average particle diameter (D50) of the secondary particles may be more than 2 and 10 or less. Within this range, the resistance of the active material may not increase, and boost charging performance may not decrease. For example, the ratio may be 2.1, 2.5, 3, 3.5, 4, 4.5, 5, 5.5, 6, 6.5, 7, 7.5, 8, 8.5, 9, 9.5, or 10, and, in an embodiment, 3 to 6, for example, 4 to 6, or 5 to 6. Within this range, the above-described orientation degree and sphericity may be easily achieved.

The amorphous carbon is contained in a coating layer that surrounds the surface of the secondary particles. The amorphous carbon may reduce the porosity inside the negative electrode active material and suppress side reactions between the negative electrode active material and the electrolyte, thereby improving charge/discharge rate characteristics.

In an embodiment, the coating layer containing the amorphous carbon may have a thickness of 5 to 50 nm, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 nm, and, in an embodiment, 10 to 50 nm, or 20 to 50 nm. Within this range, side reactions with the electrolyte may be suppressed, and charge/discharge rate characteristics may be improved.

The amorphous carbon may be a mixture of one or more of soft carbon, hard carbon, mesophase pitch carbide, and calcined coke.

The amorphous carbon may be additionally present on the surface of the primary particles.

In an embodiment, based on a total of 100 parts by weight of the natural graphite and the amorphous carbon in the first negative electrode active material, the natural graphite and the amorphous carbon may be included in a weight ratio of 90:10 to 75:25, for example, 90:10 to 80:20, 90:10 to 85:15, or 90:10 to 88:12. Within this range, side reactions with the electrolyte may be effectively suppressed, and charge/discharge rate characteristics may be improved.

Herein, a method of preparing the first negative electrode active material is described.

(1) A natural graphite raw material with an average particle diameter (D50) of 120 $\mu$m or more is pulverized to obtain primary particles with the above major axis length. In an embodiment, the natural graphite raw material may be pulverized using an airflow milling method. The airflow milling may involve pulverizing the natural graphite raw material at room temperature under a pressure of 5 to 20 kg/cm$^2$.

(2) The primary particles are assembled into secondary particles using a spheroidization device.

The assembly process aims to achieve a sphericity of 0.85 or more and may be performed using a high-intensity mixer equipped with a high-speed rotating rotor and stator. The average particle diameter (D50) of the secondary particles may be controlled by adjusting parameters such as pressure and shear speed during the spheroidization process.

(3) The prepared secondary particles are mixed with an amorphous carbon precursor.

The amorphous carbon precursor is not particularly limited as long as it forms a carbide. For example, the precursor may include one or more of phenolic resin, furan resin, epoxy resin, polyacrylonitrile resin, polyamide resin, polyimide resin, polyamide-imide resin, synthetic pitch, petroleum-based pitch, coal-based pitch, and tar.

During mixing, the precursor may be added to achieve the above-described weight ratio of natural graphite and amorphous carbon in the final product, i.e., the negative electrode active material.

(4) The mixture obtained in the mixing is calcined and heat-treated to obtain the first negative electrode active material.

In an embodiment, the heat treatment may be performed at 2500 °C or higher, for example, 2500 to 3500 °C, or 2500 to 3000 °C. Within this range, the negative electrode active material including secondary particles that satisfy the above ratio may easily achieve the above orientation degree, d002, and sphericity.

The heat treatment may be performed for 1 to 5 hours, for example, 1 to 4 hours, 1 to 3 hours, or 2 to 3 hours.

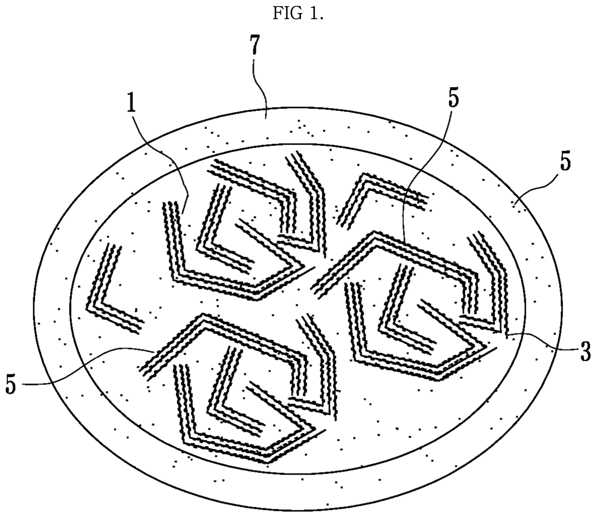

FIG. 1 is a conceptual diagram of the first negative electrode active material according to an embodiment.

Referring to FIG. 1, the first negative electrode active material includes natural graphite including secondary particles 3 formed by the assembly of primary particles 1; amorphous carbon 5 present on the surfaces of the primary particles 1; and a coating layer 7 containing amorphous carbon 5 and surrounding the secondary particles 3. Referring to FIG. 1, the secondary particle 3 is formed by spheroidizing bent primary particles 1 into an aggregated structure. This structure reduces the size of the natural graphite while forming a dense internal structure that minimizes or reduces internal pores, thereby suppressing side reactions with the electrolyte and enhancing cycle life.

**(2) Second negative electrode active material**

In an embodiment, the artificial graphite may have an average particle diameter (D50) of 10 to 20 $\mu$m, for example, 13 to 18 $\mu$m, or 15 to 20 $\mu$m. Within this range, the specific surface area may not significantly increase, which minimizes or reduces side reactions with the electrolyte and maintains boost charging performance.

In an embodiment, the artificial graphite may have a maximum particle diameter of 30 to 40 $\mu$m.

In an embodiment, the artificial graphite may have a pellet density lower than that of the first negative electrode active material, for example, 1.1 to 1.6 g/cc, or 1.1 to 1.5 g/cc.

In an embodiment, the artificial graphite may have a tap density lower than that of the first negative electrode active material, for example, 0.5 to 1.0 g/cc, or 0.5 to 0.9 g/cc.

In an embodiment, the artificial graphite may have a specific surface area of 10 $m^2$/g or less, for example, 1 to 10 $m^2$/g. The specific surface area may be the BET specific surface area.

In an embodiment, the artificial graphite may have an orientation degree of 90 or more, for example, 90 to 100, or more than 90 and 100 or less. The orientation degree may be measured using the method described above.

The artificial graphite is not limited in shape but, in an embodiment, may be spherical.

The artificial graphite may be one or more of single particles, primary particles, secondary particles formed by the assembly of primary particles, and tertiary particles formed by the assembly of secondary particles.

In an embodiment, secondary particles formed by the assembly of primary particles may additionally include a coating layer containing amorphous carbon on surfaces thereof.

**(3) Third negative electrode active material**

The third negative electrode active material includes a composite of silicon and crystalline carbon; and an amorphous carbon coating layer containing amorphous carbon and formed on the surface of the composite.

In an embodiment, the third negative electrode active material may be a three-component negative electrode active material of silicon, crystalline carbon, and amorphous carbon.

In an embodiment, the third negative electrode active material may include a composite core of silicon and crystalline carbon; and an amorphous carbon coating layer containing amorphous carbon and formed on the surface of the core. In an embodiment, the amorphous carbon may also be present in the core. In an embodiment, the amorphous carbon may come into contact with each of the silicon and crystalline carbon in the core.

In an embodiment, the third negative electrode active material may have an aspect ratio of 1 to 2.5, for example, 1 to 2. Within this range, the third negative electrode active material may undergo uniform (uniform or substantially uniform) directional expansion, which effectively suppresses the expansion of the negative electrode active material in the electrode. The aspect ratio may be measured from photographs taken using a controlled pressure scanning electron microscope (CP-SEM). The aspect ratio refers to the ratio of the maximum major axis length to the maximum minor axis length of the third negative electrode active material.

In an embodiment, the composite of silicon and crystalline carbon may have an aspect ratio of 1 to 2.5, for example, 1 to 2. Within this range, the third negative electrode active material may undergo uniform (uniform or substantially uniform) directional expansion, which effectively suppresses the expansion of the third negative electrode active material in the electrode. The aspect ratio may be measured from photographs taken using a CP-SEM. The aspect ratio refers to the ratio of the maximum major axis length to the maximum minor axis length of the composite.

In an embodiment, the composite of silicon and crystalline carbon may contain pores.

In an embodiment, the pores may be tubular or plate-shaped and may form a network in the core. The porosity (total pore volume) in the silicon-crystalline carbon composite may be appropriately adjusted, and the porosity may be, for example, 2 to 50 vol%.

In an embodiment, the third negative electrode active material may include a crystalline carbon core with internal pores; an amorphous carbon shell formed on the surface of the core; silicon particles dispersed in the pores; and amorphous carbon present in the pores.

In an embodiment, the weight ratio of silicon and crystalline carbon in the silicon-crystalline carbon composite may be 10:90 to 90:10 based on the total of 100 parts by weight of silicon and crystalline carbon. Within this range, the composite may exhibit a higher capacity, especially compared to negative electrode active materials composed of crystalline carbon. For example, the weight ratio may be 50:50 to 90:10, or 50:50 to 80:20, and a higher capacity may be exhibited within this range.

In an embodiment, the silicon may have a spherical shape with an average particle diameter (D50) of 10 to 150 nm, for example, 40 to 120 nm. Within this range, the cycle life of the battery may be improved.

The silicon may be silicon (Si) particles.

In an embodiment, the crystalline carbon may have a major axis length of 5 to 20 $\mu$m, for example, 5 to 10 $\mu$m, and have an aspect ratio of 4 to 10, for example, 4 to 8. Within this range, the cycle life of the battery may be improved, and the negative electrode plate may exhibit minimal negative electrode expansion during charge/discharge cycles in rechargeable lithium batteries, thereby effectively suppressing excessive volume increase and preventing swelling. The aspect ratio may be measured from photographs taken using a CP-SEM. The aspect ratio refers to the ratio of the maximum major axis length to the maximum minor axis length.

The crystalline carbon may include natural graphite, artificial graphite, or a combination thereof.

In an embodiment, the crystalline carbon may be rod-shaped with an elliptical cross-section.

The amorphous carbon coating layer formed on the composite surface enhances the conductivity of the composite, which further improves performance, and reduces direct contact between silicon and the electrolyte, which may effectively suppress an increase in resistance caused by byproduct formation.

In an embodiment, the amorphous carbon coating layer may have a thickness of 5 to 1000 nm, for example, 5 to 30 nm. Within this range, the layer thickness may be sufficient to prevent or substantially prevent problems related to electron transfer resistance.

The amorphous carbon in the amorphous carbon coating layer and in the core may be petroleum-based pitch, coal-based pitch, or a combination thereof.

In an embodiment, the amorphous carbon coating layer may be included in an amount of 10 to 60 wt% in the third negative electrode active material. Within this range, improvements in battery performance may be achieved.

In an embodiment, the third negative electrode active material may include 20 to 70 wt% of silicon, 3 to 50 wt% of crystalline carbon, and 20 to 50 wt% of amorphous carbon. Within this range, the negative electrode active material may effectively suppress expansion during charge/discharge cycles while improving cycle life and output characteristics.

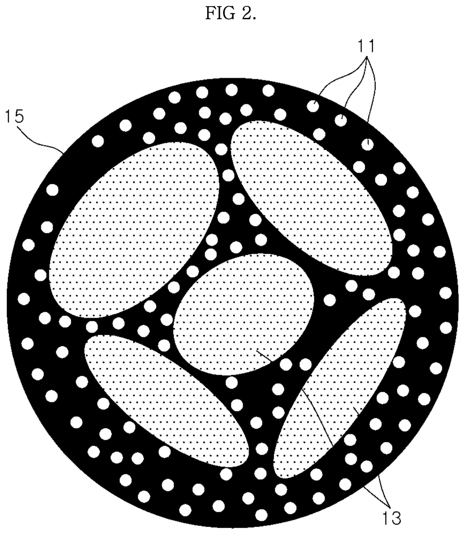

FIG. 2 is a conceptual diagram of the third negative electrode active material according to an embodiment.

Referring to FIG. 2, the third negative electrode active material includes silicon particles 11, crystalline carbon 13, and amorphous carbon 15. The amorphous carbon 15 is present between the silicon particles 11 and crystalline carbon 13, and may be present in a coating layer surrounding the silicon particles 11 and crystalline carbon 13.

Herein, a method of preparing the third negative electrode active material is described.

The third negative electrode active material may be prepared by mixing silicon particles, artificial graphite, and optionally amorphous carbon in a solvent to prepare a mixed solution, spray-drying the mixed solution, and heat-treating the dried mixed solution. The solvent may be isopropyl alcohol, ethanol, methanol, or a combination thereof. The spray-drying may be performed at 90 to 120 °C, and the heat treatment may be performed at 900 to 1000 °C under a nitrogen, argon, hydrogen, or a mixed atmosphere thereof.

In an embodiment, the negative electrode plate may further include a fourth negative electrode active material, which is different from the above-described first, second, and third negative electrode active materials.

The fourth negative electrode active material may further include a material capable of reversibly intercalating/deintercalating lithium ions, lithium metal, an alloy of lithium and a metal, a material capable of doing and dedoping lithium, or a transition metal oxide.

The material capable of reversibly intercalating/deintercalating lithium ions is a carbon-based negative electrode active material and may include, for example, crystalline carbon, amorphous carbon, or a combination thereof. Examples of the crystalline carbon may include graphite such as amorphous, platy (e.g., plate-shaped), flaky, spherical, or fibrous natural graphite or artificial graphite, and examples of the amorphous carbon may include soft carbon, hard carbon, mesophase pitch carbide, calcined coke, etc.

In an embodiment, the alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

An Si-based negative electrode active material or an Sn-based negative electrode active material may be used as the material capable of doping and dedoping lithium. The Si-based negative electrode active material may be silicon, a silicon-carbon composite, $SiO_x$ ($0<x\leq2$), an Si-Q alloy (where Q is one selected from the group consisting of an alkali metal, an alkaline earth metal, a group 13 element, a group 14 element (excluding Si), a group 15 element, a group 16 element, a transition metal, a rare earth element, and a combination thereof), or a combination thereof. The Sn-based negative electrode active material may be Sn, $SnO_2$, an Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (core) in which silicon primary particles are assembled and an amorphous carbon coating layer (shell) which is located on the surface of the secondary particle. The amorphous carbon may also be located between the silicon primary particles, and the silicon primary particles may be, for example, coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer present on the surface of the core.

The Si-based negative electrode active material or Sn-based negative electrode active material may be used in combination with a carbon-based negative electrode active material.

**Binder**

The negative electrode plate for a rechargeable lithium battery may further comprise a binder.

In an embodiment, the binder may be comprised in an amount of 0.5 wt% to 5 wt% in the negative electrode plate for a rechargeable lithium battery.

The binder may attach the negative electrode active material particles well to each other and also attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. In an embodiment, the alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

**Conductive material**

The negative electrode plate for a rechargeable lithium battery may further comprise a conductive material.

In an embodiment, the conductive material may be comprised in an amount of greater than 0 wt% to 5 wt% in the negative electrode plate for a rechargeable lithium battery.

The conductive material may impart conductivity (e.g., electrical conductivity) to the electrode. Any suitable material that does not cause chemical change (e.g., does not cause an undesirable chemical change in the rechargeable lithium battery) and that conducts electrons can be used in the battery. Some non-limiting examples thereof may include a carbon-based material, such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer, such as a polyphenylene derivative; or a mixture thereof.

In an embodiment, the negative current collector may include a copper foil, a nickel foil, a stainless steel foil, a titanium foil, a nickel foam, a copper foam, a polymer substrate coated with a conductive metal, or a combination thereof.

The negative electrode current collector may be laminated on at least one surface of the negative electrode plate.

The negative electrode plate for a rechargeable lithium battery according to another embodiment includes a negative electrode active material and a conductive material, wherein the negative electrode active material includes a mixture of the first negative electrode active material, the second negative electrode active material, and the third negative electrode active material, and the conductive material includes carbon nanotubes.

The negative electrode plate for a rechargeable lithium battery may provide a high capacity retention rate, high energy density, boost charging, and fast-charging lifetime improvement by including the above mixture as the negative electrode active material and carbon nanotubes as the conductive material.

The negative electrode plate may shorten the boost charging time, extend the lifetime, and reduce swelling of silicon-based active materials by including carbon nanotubes as the conductive material, thereby increasing energy density.

In an embodiment, carbon nanotubes are included as the conductive material, and the negative electrode plate may further enhance the reduction in boost charging time and the improvement in lifetime characteristics by including the mixture of negative electrode active materials.

As the conductive material, carbon nanotubes, a type of one-dimensional conductive material, may form a conductive network that maintains connections between active material particles during battery charging and discharging, thereby suppressing degradation. In addition, the carbon nanotubes provide effects such as a shortened boost charging time, a long lifetime, and reduced swelling of the second negative electrode active material, thereby increasing energy density.

In an embodiment, the carbon nanotubes may have an average diameter of 0.5 to 3 nm, for example, 1 to 5 nm, an average length of 5 $\mu$m or less, for example, 1 to 2 $\mu$m, and a maximum length of 20 $\mu$m or less. Within these ranges, the carbon nanotubes provide suitable dispersibility for imparting conductivity, and may form conductive networks between active material particles and between the active material and the substrate even at low content compared to conventional multi wall carbon nanotube (MWCNT) and carbon black, thereby effectively suppressing degradation during battery cycling.

Here, "average diameter" refers to the average diameter of the carbon nanotubes. If the cross-section of a carbon nanotube is circular, the diameter refers to the diameter of the circular carbon nanotube cross-section. If the cross-section is non-circular, e.g., irregular, the diameter refers to the longest axis length of the cross-section.

In an embodiment, the specific surface area (SSA) is a criterion for determining whether the electrode slurry prepared using a conductive material dispersion, which is prepared using carbon nanotubes having the specific surface area described below, can provide low powder resistance. Although it may be easy to measure the specific surface area of carbon nanotubes themselves, it is not easy to measure the specific surface area of the dispersed carbon nanotubes in the conductive material dispersion containing the carbon nanotubes.

The SSA may be determined using a Malvern particle size analyzer on the carbon nanotube dispersion.

The carbon nanotubes may be a mixture of one or more of single-wall carbon nanotubes and multi-wall carbon nanotubes. In an embodiment, for example, the carbon nanotubes may be single-wall carbon nanotubes.

In an embodiment, the carbon nanotubes may have a specific surface area of 240 to 280 m$^2$/g. Within this range, it is easy to enhance the conductivity of the slurry containing the negative electrode active material. In an embodiment, the carbon nanotubes may be included in an amount of 95 wt% or more of the conductive material, for example, 95 to 100 wt%. The specific surface area may be a BET specific surface area.

In an embodiment, the conductive material, for example, carbon nanotubes, may be included in an amount of 0.01 to 5 parts by weight, for example 0.01 to 0.2 parts by weight, based on 100 parts by weight of the mixture of negative electrode active materials. Within this range, the proportion of the negative electrode active material may be maximized or increased (minimizing or reducing the decrease in negative electrode current density) within the minimum range that maintains the conductive network during contraction and expansion of the negative electrode. However, the proportion of conductive material may vary depending on a type and content of silicon.

In an embodiment, the conductive material may be included in an amount of 0.01 to 5 wt%, for example, 0.01 to 0.2 wt%, based on the negative electrode plate. Within this range, the effects of increased energy density, improved boost charging characteristics, a long lifetime, and reduced swelling may be achieved. In an embodiment, for example, carbon nanotubes as the conductive material may be included in the negative electrode plate in an amount of 0.03 to 0.05 wt%. Within this range, the content of active material is not reduced, and, thus, there is no decrease in battery capacity.

According to another embodiment, a rechargeable lithium battery comprises the negative electrode plate for the rechargeable lithium battery.

The rechargeable lithium battery may include the negative electrode plate and the positive electrode for the lithium secondary battery. The negative electrode plate may be substantially the same as described above.

**Positive electrode**

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can function as a sacrificial positive electrode.

**Positive electrode active material**

The positive electrode active material may include a compound (lithiated intercalation compound) that is capable of intercalating and deintercalating lithium. In an embodiment, at least one of a composite oxide of lithium and a metal selected from cobalt, manganese, nickel, and combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any of the following Chemical Formulas may be used: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, an amount of the positive electrode active material may be about 90 wt% to about 99.5 wt% based on 100 wt% of the positive electrode active material layer. In an embodiment, amounts of the binder and the conductive material may be about 0.5 wt% to about 5 wt%, respectively, based on 100 wt% of the positive electrode active material layer.

The binder may attach the positive electrode active material particles well to each other and also attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer, such as a polyphenylene derivative; or a mixture thereof.

In an embodiment, Al may be used as the current collector, but the present disclosure is not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, if using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

**Separator**

Depending on a type of the rechargeable lithium battery, a separator may be present between the positive electrode and the negative electrode. In an embodiment, the separator may include any of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both, or opposite, surfaces of the porous substrate.

The porous substrate may be a polymer film formed of any polymer selected from a polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer. The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into cylindrical, prismatic, pouch-type, coin-type batteries, and the like depending on a shape thereof.

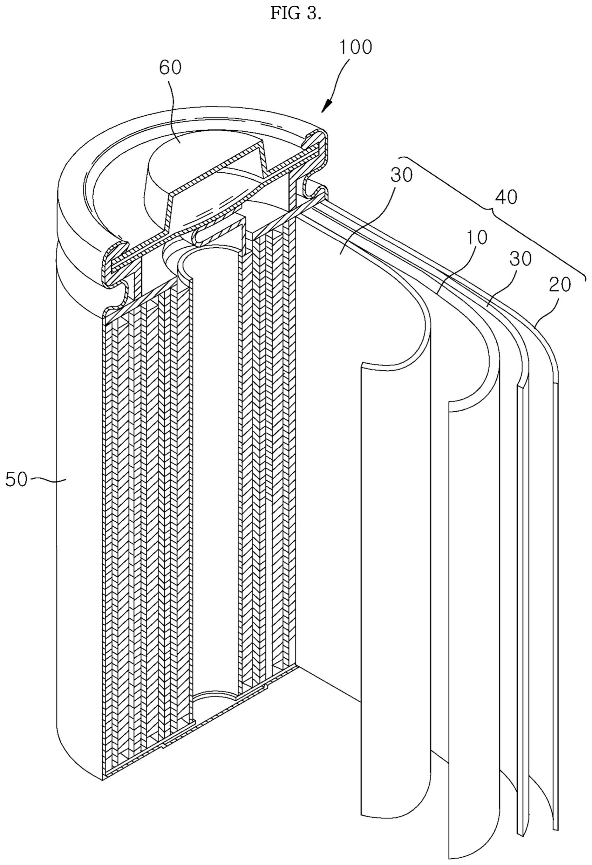

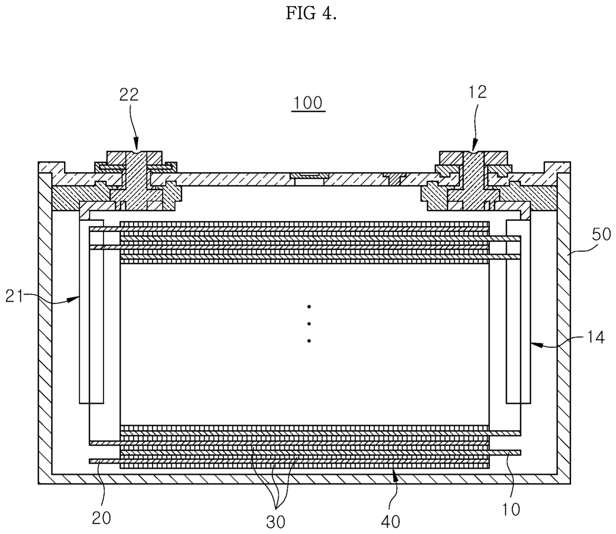

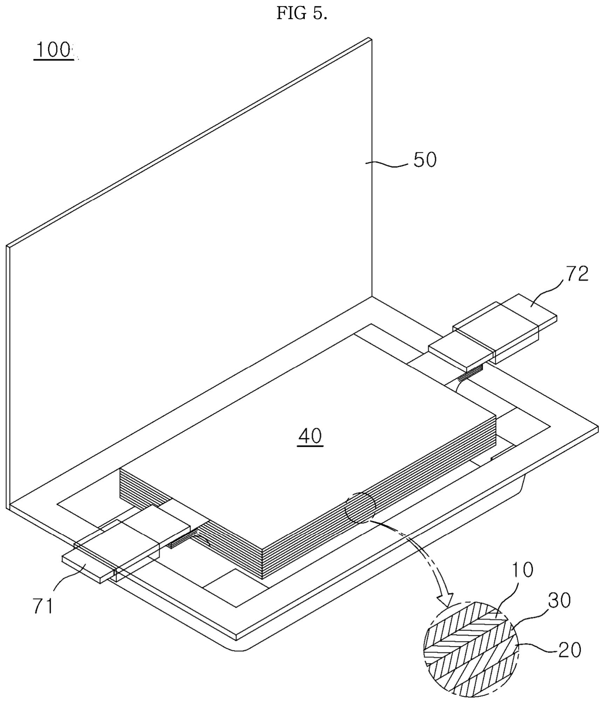

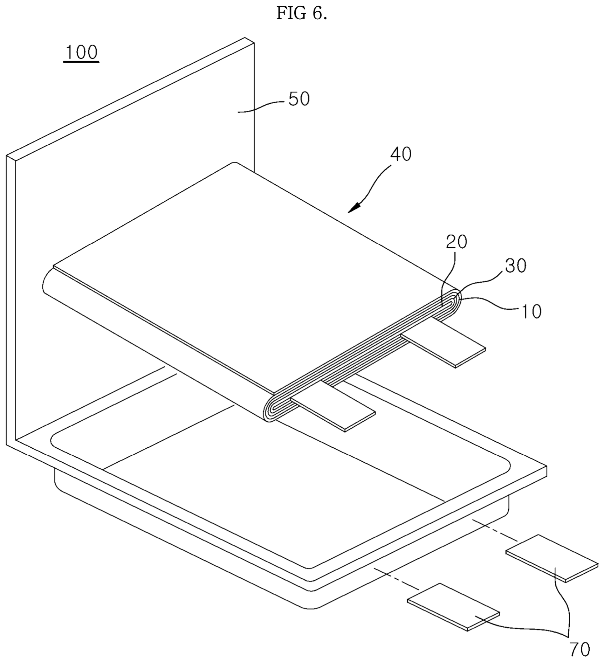

FIGS. 3 to 6 are schematic views illustrating a rechargeable lithium battery according to an embodiment. FIG. 3 shows a cylindrical battery; FIG. 4 shows a prismatic battery; and FIGS. 5 and 6 show pouch-type batteries. Referring to FIGS. 3 to 6, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 3. As shown in FIG. 4, the rechargeable lithium battery 100 may include a positive lead tab 14, a positive terminal 12, a negative lead tab 21, and a negative terminal 22. As shown in FIGS. 5 and 6, the rechargeable lithium battery 100 may include an electrode tab 70, which may be, for example, a positive electrode tab 71 and a negative electrode tab 72 functioning as an electrical path for inducing the current formed in the electrode assembly 40 to the outside.

The rechargeable lithium battery according to an embodiment may be applied to automobiles, mobile phones, and/or various types of electric devices, as non-limiting examples.

An electronic device or an electronic vehicle may contain the rechargeable lithium battery.

Herein, examples and comparative examples of the present invention are described. However, the following examples are provided as illustrative embodiments of the present invention, and the present invention is not limited to the following examples.

**Example 1**

**(1) Preparation of first negative electrode active material**

A flaky natural graphite raw material with an average particle diameter (D50) of 120 $\mu$m was pulverized using an airflow milling method to obtain plate-shaped primary particles with a major axis length of 30 $\mu$m. The primary particles were assembled into spherical secondary particles with an average particle diameter (D50) of 7 $\mu$m using a spheroidization device. The secondary particles were mixed with pitch carbon and heat-treated in a calcining furnace at 3000 °C for 2 hours to prepare a first negative electrode active material. The amount of pitch carbon added was adjusted so that a weight ratio of natural graphite to amorphous carbon was 90:10 in the first negative electrode active material.

**(2) Second negative electrode active material**

As a second negative electrode active material, artificial graphite (spherical shape, average particle diameter D50: 15 $\mu$m, pellet density: 1.5 g/cc, tap density: 0.9 g/cc, BET specific surface area: 1.5 m$^2$/g, orientation degree: 100) was used. The artificial graphite consists of secondary particles formed by the assembly of primary particles.

**(3) Preparation of third negative electrode active material**

Artificial graphite with an average particle diameter (D50) of 3 to 5 $\mu$m and an aspect ratio of 4 to 10; silicon nanoparticles with a D50 of 100 nm; and petroleum-based pitch amorphous carbon were mixed in a 6:54:40 weight ratio, and the mixture was dispersed in an isopropyl solvent using a homogenizer to prepare a dispersion. The dispersion was spray-dried at 120 °C using a spray dryer. The spray-dried product was heat-treated in a nitrogen atmosphere furnace at 1000 °C to form a silicon-carbon composite core containing artificial graphite and silicon particles; and an amorphous carbon coating layer on the core surface. The resulting product was pulverized and sieved through a 400-mesh screen to obtain a third negative electrode active material (C-1), which includes a silicon-carbon composite core containing artificial graphite and silicon particles; and an amorphous carbon coating layer formed on the core surface.

The third negative electrode active material includes a silicon-artificial graphite composite core and an amorphous carbon shell formed on the core surface. The third negative electrode active material has a 5:5 weight ratio of silicon particles to artificial graphite, an amorphous carbon coating layer with a thickness of 30 nm, and an aspect ratio of 1 to 2.5. The third negative electrode active material includes 54 wt% of silicon particles, 6 wt% of artificial graphite, and 40 wt% of amorphous carbon.

(4) A negative electrode active material mixture was prepared by mixing 47 wt% of the first negative electrode active material, 47 wt% of the second negative electrode active material, and 6 wt% of the third negative electrode active material.

A negative electrode active material slurry was prepared by mixing 97.5 wt% of the prepared negative electrode active material mixture, 1.5 wt% of styrene-butadiene rubber as a binder, and 1.0 wt% of carboxymethyl cellulose as an additive in distilled water.

The negative electrode active material slurry was applied onto a copper current collector, dried, and roll-pressed to manufacture a negative electrode plate.

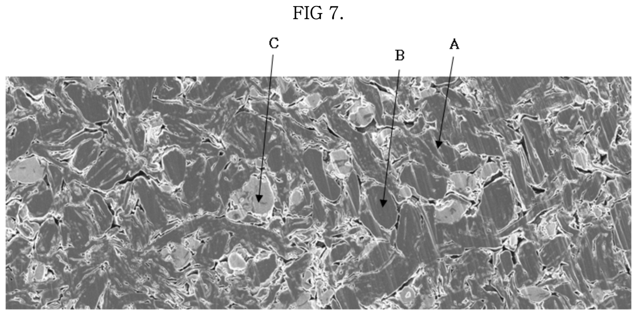

FIG. 7 shows SEM analysis results of the negative electrode plate. Referring to FIG. 7, it can be seen that the third negative electrode active material A, the second negative electrode active material B, and the first negative electrode active material C are present in the negative electrode plate.

A half-cell was manufactured using the negative electrode plate, a lithium metal counter electrode, and an electrolyte. The electrolyte is a mixed solvent of ethylene carbonate and dimethyl carbonate (at a 3:7 volume ratio) in which 1 M of LiPF$_6$ is dissolved.

**Example 2**

A first negative electrode active material was prepared in the same manner as in Example 1, except that spheroidization conditions were modified. Using the prepared first negative electrode active material, a negative electrode and a half-cell were manufactured in the same manner as in Example 1.

**Example 3**

A first negative electrode active material was prepared in the same manner as in Example 1, except that spheroidization conditions were modified. Using the prepared first negative electrode active material, a negative electrode and a half-cell were manufactured in the same manner as in Example 1.

**Examples 4 and 5**

Negative electrode plates and half-cells were manufactured in the same manner as in Example 1, except that the weight ratios of each component were modified as shown in Table 1 below.

**Comparative Example 1**

A first negative electrode active material was prepared in the same manner as in Example 1, except that pitch carbon was not added during the preparation of the first negative electrode active material. Using the prepared first negative electrode active material, a negative electrode and a half-cell were manufactured in the same manner as in Example 1.

**Comparative Example 2**

A flaky natural graphite raw material with an average particle diameter (D50) of 120 $\mu$m or more was pulverized using an airflow milling method to obtain primary particles with a D50 of 120 $\mu$m. The primary particles were assembled into spherical secondary particles with an average particle diameter (D50) of 20 $\mu$m using a spheroidization device. The secondary particles were mixed with pitch carbon and heat-treated in a calcining furnace at 1200 °C for 2 hours to prepare the first negative electrode active material. The amount of pitch carbon added was adjusted so that a weight ratio of natural graphite to amorphous carbon was 90:10 in the first negative electrode active material.
Using the prepared first negative electrode active material, a negative electrode and a half-cell were manufactured in the same manner as in Example 1.

**Comparative Example 3**

A flaky natural graphite raw material with an average particle diameter (D50) of 80 $\mu$m was pulverized using an airflow milling method to obtain primary particles with a major axis length of 7 $\mu$m. The primary particles were assembled into spherical secondary particles with an average particle diameter (D50) of 15.6 $\mu$m using a spheroidization device. The secondary particles were mixed with pitch carbon and heat-treated in a calcining furnace at 1200 °C for 2 hours to prepare a first negative electrode active material. The amount of pitch carbon added was adjusted so that a weight ratio of natural graphite to amorphous carbon was 90:10 in the negative electrode active material.
Using the prepared first negative electrode active material, a negative electrode and a half-cell were manufactured in the same manner as in Example 1.

**Comparative Example 4**

A negative electrode plate and a half-cell were manufactured in the same manner as in Example 1, except that silicon oxide (C-2) was used instead of the third negative electrode active material.

**(Experimental Example 1) Evaluation of first negative electrode active material Pellet density (units: g/cc)**

The pellet density was measured using a Carver 4350.L device from Carver, Inc. To determine the powder density, 1.0 g of each first negative electrode active material of the Examples and Comparative Examples was placed in a mold and compressed under a pressure of 2.0 tons for 30 seconds.

**Orientation degree**

The orientation degree was measured using an XRD analyzer, X'Pert Pro from Malvern Panalytical. For each first negative electrode active material of the Examples and Comparative Examples, the ratio of diffraction peak intensity of the (002) plane to that of the (110) plane, I(002)/I(110), was calculated by X-ray diffraction analysis with Cu $\alpha$ radiation.

**d002 (units: Å)**

The d002 was measured using an XRD analyzer, X'Pert Pro from Malvern Panalytical. For each first negative electrode active material of the Examples and Comparative Examples, the interplanar spacing of the (002) plane, was calculated by X-ray diffraction analysis with Cu $\alpha$ radiation.

**Mercury cumulative pore volume (units: mL/g)**

The Hg cumulative pore volume was measured using a Hg intrusion porosimeter, AutoPore V from Micromeritics. Each first negative electrode active material of the Examples and Comparative Examples was measured using a Hg intrusion porosimeter, AutoPore V from Micromeritics. Mercury was added to the first negative electrode active material, and a pressure of 0.1 psi was applied to force mercury into the first negative electrode active material. Afterward, the pressure was increased to 60,000 psi, and the mercury porosity was measured by observing the change in volume of mercury. The measured pores have a size of 0.01 to 1 $\mu$m.

**Sphericity**

Sphericity was measured using a Morphologi 4 analyzer from Malvern Panalytical. For each first negative electrode active material of the Examples and Comparative Examples, values A and B in Equation 1 above were obtained, and sphericity was calculated according to Equation 1.

**(Experimental Example 2) Evaluation of battery characteristics**

The manufactured half-cells were subjected to charge/discharge cycles at 0.1 C to measure their charge and discharge capacities. The measured discharge capacities are shown in Table 1 below. In addition, charge/discharge efficiency (discharge capacity/charge capacity x 100%) was calculated.

The manufactured half-cells were subjected to charge/discharge cycles to evaluate their charging characteristics as follows: 1 cycle of charging at 0.2 C constant current (CC) and constant voltage (CV) and discharging at 0.2 C; 1 cycle of charging at 0.5 C CC and discharging at 0.2 C; 1 cycle of charging at 1C CC and discharging at 0.2 C; and 1 cycle of charging at 2 C CC and discharging at 0.2 C. At this time, the charging/discharging conditions were as follows: the constant current (CC) charging phase was conducted with a cutoff voltage of 10 mV, the constant voltage (CV) charging phase was conducted with a cutoff time of 15 hours, and the discharge was conducted with a cutoff voltage of 1.5 V. Charging characteristics were measured at each C-rate. The charging characteristics results were calculated and expressed as the ratio of the 2 C CC charge capacity to the 0.2 C CC charge capacity.

**Energy density (units: Wh/L)**

Energy density was evaluated by dividing the product of the cell capacity (Ah) multiplied by the average voltage (V) by the volume of the cell.

**Boost charging time (units: minutes)**

Boost charging time refers to the time taken to charge the battery to a state of charge (SOC) of 8 to 80% under constant current charging conditions. This was evaluated by identifying a charging pattern in which the maximum voltage of 4.2 V was not reached during charging.

**Fast-charging lifetime (units: cycles)**

Once the boost charging time was determined, the battery was charged to an SOC (state of charge) of 8 to 80%, and then discharged at a constant current of 0.33 C and a discharge voltage of 2.8 V. This process was defined as 1 cycle, and the fast-charging lifetime was evaluated as the number of cycles until the battery reached a state of health (SOH) of 80%.

Table 1

| | | Examples | | | | | Comparative Examples | | | |
|---|---|---|---|---|---|---|---|---|---|---|
| | | 1 | 2 | 3 | 4 | 5 | 1 | 2 | 3 | 4 |
| First negative electrod e active material | major axis length of Primary particle ($\mu$m) | 30 | 30 | 30 | 30 | 30 | 30 | 120 | 7 | 30 |
| | Seconda ry particle D50 ($\mu$m) | 7 | 10 | 5 | 7 | 7 | 7 | 20 | 15.6 | 7 |
| | Pellet density | 1.75 | 1.80 | 1.60 | 1.75 | 1.75 | 1.9 | 1.8 | 1.78 | 1.75 |
| | Orientati on degree | 60 | 80 | 55 | 60 | 60 | 70 | 110 | 120 | 60 |
| | d002 (Å) | 3.35 69 | 3.35 67 | 3.35 73 | 3.35 69 | 3.35 69 | 3.35 58 | 3.35 59 | 3.35 61 | 3.35 69 |
| | Sphericit y | 0.95 | 0.95 | 0.90 | 0.95 | 0.95 | 0.95 | 0.95 | 0.95 | 0.95 |
| | Mercury cumulati ve pore volume (< 1 $\mu$m, mL/g) | 0.03 5 | 0.04 1 | 0.03 7 | 0.03 5 | 0.03 5 | 0.15 8 | 0.06 5 | 0.06 6 | 0.03 5 |
| Third negative electrode active material | | C-1 | C-1 | C-1 | C-1 | C-1 | C-1 | C-1 | C-1 | C-2 |
| Weight ratio | | 47:4 7:6 | 47:4 7:6 | 47:4 7:6 | 70.5 :23. 5:6 | 23.5 :70. 5:6 | 47:4 7:6 | 47:4 7:6 | 47:4 7:6 | 47:4 7:6 |
| Energy density (Wh/L) | | 750 | 750 | 735 | 760 | 755 | 750 | 755 | 730 | 755 |
| Boost charging time (minute) | | 15 | 18 | 13 | 13 | 17 | 20 | 30 | 22 | 20 |
| Fast-charging lifetime (cyc) | | 150 0 | 120 0 | 150 0 | 160 0 | 120 0 | 1000 | 500 | 800 | 1200 |

* Weight ratio: the proportion of the first, second, and third negative electrode active materials in 100 parts by weight of the total of the three negative electrode active materials.

As shown in Table 1, the negative electrode plates for a rechargeable lithium battery of the Examples exhibit high energy density. To evaluate boost charging and long lifetime, both boost charging time and fast-charging lifetime should be assessed together. As shown in Table 1, the negative electrode plates of the Examples exhibit shorter boost charging times and longer fast-charging lifetimes, demonstrating their ability to effectively exhibit boost charging and long lifetime effects.

However, as shown in Table 1, the negative electrode plates of the Comparative Examples, which do not meet the compositions of the negative electrode plate of the present invention, exhibit longer boost charging times and shorter fast-charging lifetimes, resulting in significantly diminished boost charging and long lifetime effects compared to the Examples.

**Example 6**

**(1) Preparation of first negative electrode active material**

A flaky natural graphite raw material with an average particle diameter (D50) of 120 $\mu$m was pulverized using an airflow crushing method to obtain plate-shaped primary particles with a major axis length of 20 to 30 $\mu$m. The primary particles were then assembled into spherical secondary particles with an average particle diameter (D50) of 7 $\mu$m using a spheroidization device. The secondary particles were mixed with pitch carbon and heat-treated in a calcining furnace at 3000 °C for 2 hours to prepare the first negative electrode active material. The amount of pitch carbon added was adjusted to achieve a 90:10 weight ratio of natural graphite to amorphous carbon in the negative electrode active material.

(2) As the second negative electrode active material, artificial graphite (average particle diameter D50: 15 $\mu$m, pellet density: 1.5 g/cc, tap density: 1.0 g/cc, BET specific surface area: 1.5 $m^2$/g, orientation degree: 100) was used. The artificial graphite is a secondary particle formed by the assembly of primary particles.

(3) Artificial graphite with an average particle diameter (D50) of 3 to 5 $\mu$m and an aspect ratio of 4 to 10; silicon nanoparticles with a D50 of 100 nm; and petroleum-based pitch amorphous carbon were mixed in a 40:40:20 weight ratio, and the mixture was dispersed in an isopropyl solvent using a homogenizer to prepare a dispersion. The dispersion was spray-dried at 120 °C using a spray drier. The spray-dried product was heat-treated in a nitrogen atmosphere furnace at 1000 °C to form a silicon-carbon composite core containing artificial graphite and silicon particles and an amorphous carbon coating layer on the core surface. The resulting product was pulverized and sieved through a 400-mesh screen to obtain a third negative electrode active material (C-1), which includes a silicon-carbon composite core containing artificial graphite and silicon particles; and an amorphous carbon coating layer formed on the core surface.

The third negative electrode active material includes a silicon-artificial graphite composite core and an amorphous carbon shell formed on the core surface. The third negative electrode active material has a 5:5 weight ratio of silicon particles to artificial graphite, an amorphous carbon coating layer with a thickness of 30 nm, and an aspect ratio of 1 to 2.5. The third negative electrode active material includes 40 wt% of silicon particles, 40 wt% of artificial graphite, and 20 wt% of amorphous carbon.

(4) A negative electrode active material mixture was prepared by mixing 47 parts by weight of the first negative electrode active material, 47 parts by weight of the second negative electrode active material, and 6 parts by weight of the third negative electrode active material, based on 100 parts by weight of the negative electrode active material mixture.

A negative electrode active material slurry was prepared by mixing 96.96 wt% of the prepared negative electrode active material mixture, 0.04 wt% of single-walled carbon nanotubes (SWCNTs, D-1) as a conductive material, 2.2 wt% of styrene-butadiene rubber as a binder, and 0.8 wt% of carboxymethyl cellulose (CMC) in distilled water.

The negative electrode active material slurry was applied onto a copper current collector, dried, and roll-pressed to manufacture a negative electrode plate.

A half-cell was manufactured using the negative electrode plate, a lithium metal counter electrode, and an electrolyte. The electrolyte is a mixed solvent of ethylene carbonate and dimethyl carbonate (at a 3:7 volume ratio) in which 1 M $LiPF_6$ is dissolved.

**Example 7**

A first negative electrode active material was prepared in the same manner as in Example 6, except that spheroidization conditions were modified. Using the prepared first negative electrode active material, a negative electrode plate and a half-cell were manufactured in the same manner as in Example 6.

**Example 8**

A first negative electrode active material was prepared in the same manner as in Example 6, except that spheroidization conditions were modified. Using the prepared first negative electrode active material, a negative electrode plate and a half-cell were manufactured in the same manner as in Example 6.

**Example 9**

A negative electrode plate and a half-cell were manufactured in the same manner as in Example 6, except that the weight ratios of each component of the negative electrode active material were modified as shown in Table 2 below.

**(Experimental Example 3) Evaluation of first negative electrode active material**

The first negative electrode active material was evaluated in the same manner as in Experimental Example 1.

**(Experimental Example 4) Evaluation of battery characteristics Capacity (units: mAh/g) and charging rate (units: %)**

The manufactured half-cells were subjected to charge/discharge cycles at 0.1 C to measure their charge/-discharge capacities. The measured discharge capacities are shown in Table 1 below. In addition, charge/discharge efficiency (discharge capacity/charge capacity x 100%) was calculated.

The manufactured half-cells were subjected to charge/discharge cycles to evaluate their charging characteristics as follows: 1 cycle of charging at 0.2 C constant current (CC) and constant voltage (CV) and discharging at 0.2 C; 1 cycle of charging at 0.5 C CC and discharging at 0.2 C; 1 cycle of charging at 1C CC and discharging at 0.2 C; and 1 cycle of charging at 2 C CC and discharging at 0.2 C. At this time, the charging/discharging conditions were as follows: the constant current (CC) charging phase was conducted with a cutoff voltage of 10 mV, the constant voltage (CV) charging phase was conducted with a cutoff time of 15 hours, and the discharge was conducted with a cutoff voltage of 1.5 V. Charging characteristics were measured at each C-rate. The charging characteristics results were calculated and expressed as the ratio of the 2 C CC charge capacity to the 0.2 C CC charge capacity.

**Direct current internal resistance (DC-IR, units: $\Omega$)**

The half-cells manufactured according to the examples and comparative examples were charged at 0.2 C under constant current/constant voltage at 25 °C under cut-off conditions of 10 mV and 0.01 C, and then allowed to rest for 10 minutes. Afterward, they were discharged at a constant current of 0.2 C with a 1.5 V cut-off condition and allowed to rest for 10 minutes. Under these charge-discharge conditions, one cycle of charge and discharge was performed. At SOC50 (the state in which the battery is charged to 50% of its full capacity, which corresponds to 50% discharged in terms of discharge state), a current of 3 C was applied for 1 second, and the resulting voltage drop (V) was measured. The resistance was calculated from the measured voltage and applied current (3 C), and the result was expressed as the direct current internal resistance (DC-IR).

**Rion (units: $\Omega$)**

A symmetric cell was manufactured using the prepared negative electrode plate, and then electrochemical impedance spectroscopy (EIS) was performed. Rion was calculated from the results using a Nyquist plot.

**Boost charging time (units: seconds)**

Boost charging time refers to the time taken to charge the battery to a state of charge (SOC) of 8 to 80% under constant current charging conditions. This was evaluated by identifying a charging pattern in which the maximum voltage of 4.2 V was not reached during charging.

**Fast-charging lifetime (units: cycles)**

Once the boost charging time was determined, the battery was charged to an SOC (state of charge) of 8 to 80%, and then discharged at a constant current of 0.33 C and a discharge voltage of 2.8 V. This process was defined as 1 cycle, and for pouch cells, the fast-charging lifetime was evaluated as the number of cycles until the battery reached a state of health (SOH) of 80%.

**Expansion rate (swelling, units: %)**

The expansion rate was measured using a thickness monitoring system (TMS).

The cells manufactured according to the Examples and Comparative Examples were subjected to a charge/-discharge cycle lifetime test at 45 °C with a charge voltage of 4.35 V and a discharge voltage of 2.8 V under 0.5 C/0.5 C cycling while monitoring the cell thickness in real time. The thickness increase rate was calculated by comparing the fully discharged thickness after 1 cycle to that after 50 cycles.

Expansion rate = (Cell thickness after 50 cycles - Cell thickness after 1 cycle)/Cell thickness after 1 cycle $\times$ 100

Table 2

| | | Example | | | |
|---|---|---|---|---|---|
| | | 6 | 7 | 8 | 9 |
| First negative electrod e active material | major axis length of Primary particle | 30 | 30 | 30 | 30 |
| | Secondary particles D50 | 7 | 10 | 5 | 7 |
| | Pellet density | 1.75 | 1.80 | 1.60 | 1.75 |
| | Orientation degree | 60 | 80 | 55 | 60 |
| | d002 | 3.3569 | 3.3567 | 3.3573 | 3.3569 |
| | Sphericity | 0.95 | 0.95 | 0.90 | 0.95 |
| | Mercury cumulative pore volume | 0.035 | 0.041 | 0.037 | 0.035 |
| Weight ratio | | 47:47:6 | 47:47:6 | 47:47:6 | 48:48:4 |
| Capacity (mAh/g) | | 422 | 424 | 420 | 400 |
| Charging Rate (%) | | 50 | 45 | 55 | 42 |
| DCIR($\Omega$) | | 6.5 | 7.5 | 6.0 | 8.0 |
| Rion($\Omega$) | | 10 | 14 | 8 | 12 |
| Boost charging time (second) | | 780 | 900 | 820 | 800 |
| Fast-charging lifetime (cyc) | | 300 | 250 | 300 | 240 |
| Expansion rate (%) | | 4.5 | 4.5 | 4.5 | 3.5 |
| * In Table 2, Weight ratio: First negative electrode active material: Second negative electrode active material: Third negative electrode active material | | | | | |

As shown in Table 2, the negative electrode plates for a rechargeable lithium battery of the Examples exhibit a swelling reduction effect for silicon-based active materials, a short boost charging time, and a long fast-charging lifetime, thereby demonstrating their ability to effectively exhibit boost charging performance. In addition, the negative electrode plates of the Examples have low ion migration resistance (Rion), which is expected to facilitate smooth lithium ion movement within the electrode plate, making them advantageous for boost charging.

The negative electrode plate for a rechargeable lithium battery according to an aspect of embodiments of the present invention can exhibit excellent rechargeable lithium battery performance by providing high energy density, boost charging, and long lifetime characteristics.

The negative electrode plate for a rechargeable lithium battery according to an aspect of embodiments of the present invention includes natural graphite with significantly reduced resistance and can exhibit excellent rechargeable lithium battery performance by providing reduced swelling of silicon-based active materials, a shortened boost charging time, a long lifetime, and high energy density.

Although some example embodiments of the present invention have been described above, the present invention is not limited thereto, and it is to be understood that various modifications are possible within the scope of the claims, detailed description, and attached drawings of the invention, and that such modifications also fall within the scope of the present invention.

**Claims**

1.    A negative electrode plate for a rechargeable lithium battery (100), the negative electrode plate comprising a negative electrode active material comprising a mixture of a first negative electrode active material (C), a second negative electrode active material (B), and a third negative electrode active material (A),

wherein the first negative electrode active material (C) comprises natural graphite comprising secondary particles (3) in which primary particles (1) are arranged; and an amorphous carbon coating layer (7) containing amorphous carbon and surrounding the secondary particles (3), and wherein the first negative electrode active material (C) has an orientation degree of 90 or less and a d002 value of 3.356 Å to 3.360 Å, wherein the orientation degree refers to the ratio of the diffraction peak intensity of the (002) plane [I(002)] to that of the (110) plane [I(110)], as measured by X-ray diffraction analysis using Cu α radiation and is expressed as I(002)/I(110), and wherein the d002 value refers to the interplanar spacing of the (002) plane for the first negative electrode active material (C), as measured by X-ray diffraction analysis using Cu α radiation,
the second negative electrode active material (B) comprises artificial graphite,
the third negative electrode active material (A) comprises a composite of silicon (11) and crystalline carbon (13); and an amorphous carbon coating layer containing amorphous carbon (15) and formed on a surface of the composite.

2. The negative electrode plate as claimed in claim 1, wherein the first negative electrode active material (C) has a mercury (Hg) cumulative pore volume of 0.01 mL/g to 0.06 mL/g, determined by Hg intrusion porosimeter.

3. The negative electrode plate according to any of the previous claims, wherein the first negative electrode active material has a pellet density of 1.60 g/cc to 1.80 g/cc, determined by using a Carver 4350.L device; and/or wherein the first negative electrode active material has a sphericity of 0.85 or more, wherein the sphericity (S) is defined as:

$$\text{Sphericity (S)} = 4\pi \times A/B^2,$$

where A is the area of the first negative electrode active material, and B is the perimeter of the first negative electrode active material's shape.

4. The negative electrode plate according to any of the previous claims, wherein a ratio of a major axis length of the primary particles (1) to an average particle diameter (D50) of the secondary particles (3) is greater than 2 and less than or equal to 10, wherein the major axis length is determined from photographs taken using a controlled pressure scanning electron microscope (CP-SEM) and wherein a particle size distribution for determining the average particle diameter (D50) is determined by a laser diffraction particle size measuring device; and/or wherein the primary particles are plate-shaped, and the secondary particles are spherical.

5. The negative electrode plate according to any of the previous claims, wherein the primary particles have a major axis length of 10 μm to 200 μm, wherein the major axis length is determined from photographs taken using a controlled pressure scanning electron microscope (CP-SEM); and/or wherein the primary particles further comprise amorphous carbon on surfaces thereof.

6. The negative electrode plate according to any of the previous claims, wherein the secondary particles have an average particle diameter (D50) of 30 μm or less, wherein a particle size distribution for determining the average particle diameter (D50) is determined by a laser diffraction particle size measuring device.

7. The negative electrode plate according to any of the previous claims, wherein the natural graphite comprises flaky natural graphite; and/or wherein the amorphous carbon comprises a mixture of one or more of soft carbon, hard carbon, mesophase pitch carbide, and calcined coke.

8. The negative electrode plate according to any of the previous claims, wherein, based on a total of 100 parts by weight of the natural graphite and the amorphous carbon in the first negative electrode active material (C), the natural graphite and the amorphous carbon are included in a weight ratio of 90:10 to 75:25.

9. The negative electrode plate according to any of the previous claims, wherein the third negative electrode active material (A) has an aspect ratio of 1 to 2.5, wherein the aspect ratio is determined from photographs taken using a controlled pressure scanning electron microscope (CP-SEM).

10. The negative electrode plate according to any of the previous claims, wherein the third negative electrode active material (A) comprises 20 wt% to 70 wt% of silicon (11), 3 wt% to 50 wt% of crystalline carbon (13), and 20 wt% to 50 wt% of amorphous carbon (15).

11. The negative electrode plate according to any of the previous claims, wherein the artificial graphite has a maximum particle diameter of 30 $\mu$m to 40 $\mu$m, and wherein a particle size distribution for determining the maximum particle diameter is determined by a laser diffraction particle size measuring device.

12. The negative electrode plate according to any of the previous claims, wherein the mixture comprises 20 wt% to 75 wt% of the first negative electrode active material (C), 20 wt% to 75 wt% of the second negative electrode active material (B), and 1 wt% to 20 wt% of the third negative electrode active material (A).

13. The negative electrode plate according to any of the previous claims, further comprising a conductive material, wherein the conductive material comprises carbon nanotubes.

14. The negative electrode plate as claimed in claim 13, wherein the carbon nanotubes are included in an amount of 0.01 wt% to 5 wt% based on a total weight of the negative electrode plate; and/or wherein the carbon nanotubes have an average diameter of 0.5 nm to 3 nm, an average length of 5 $\mu$m or less, and a specific surface area of 240 m$^2$/g to 280 m$^2$/g, wherein the specific surface area is determined using a Malvern particle size analyzer on the carbon nanotube dispersion.

15. A rechargeable lithium battery (100) comprising:

   the negative electrode plate for a rechargeable lithium battery as claimed in any of the previous claims; and
   a positive electrode (10).

FIG 1.

FIG 2.

FIG 3.

FIG 4.

FIG 5.

FIG 6.

FIG 7.

Europäisches
Patentamt
European
Patent Office
Office européen
des brevets

# EUROPEAN SEARCH REPORT

**Application Number**

EP 25 21 9184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 12 132 194 B2 (SAMSUNG SDI CO LTD [KR]) 29 October 2024 (2024-10-29) * claims 1,5 * * column 4 - column 5 * | 1-15 | INV. H01M4/133 H01M4/134 H01M4/1393 H01M4/1395 H01M4/36 H01M4/38 |
| A | EP 4 465 381 A1 (SAMSUNG SDI CO LTD [KR]) 20 November 2024 (2024-11-20) * claim 1 * * example 1 * | 1-15 | |
| A | WO 2024/219617 A1 (SAMSUNG SDI CO LTD [KR]) 24 October 2024 (2024-10-24) * "Other negative active materials" * * examples 5-1 * * paragraph [0267] - paragraph [0269] * | 1-15 | |
| A | US 2021/013493 A1 (CHO YUNGU [KR] ET AL) 14 January 2021 (2021-01-14) * claim 1 * * Preparation Examples 1-2 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 17 March 2026 | Galbiati, Ivano |

EPO FORM 1503 03.82 (P04C01)

## ANNEX TO THE EUROPEAN SEARCH REPORT
## ON EUROPEAN PATENT APPLICATION NO.

EP 25 21 9184

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | Publication date | Patent family member(s) | | Publication date |
|---|---|---|---|---|---|
| US 12132194 | B2 | 29-10-2024 | CN | 109478647 A | 15-03-2019 |
| | | | CN | 116154158 A | 23-05-2023 |
| | | | KR | 20180007618 A | 23-01-2018 |
| | | | US | 2019229325 A1 | 25-07-2019 |
| | | | US | 2023307607 A1 | 28-09-2023 |
| | | | WO | 2018012821 A1 | 18-01-2018 |
| EP 4465381 | A1 | 20-11-2024 | CN | 118943315 A | 12-11-2024 |
| | | | EP | 4465381 A1 | 20-11-2024 |
| | | | KR | 20240163415 A | 19-11-2024 |
| | | | US | 2024379959 A1 | 14-11-2024 |
| WO 2024219617 | A1 | 24-10-2024 | NONE | | |
| US 2021013493 | A1 | 14-01-2021 | KR | 20210007273 A | 20-01-2021 |
| | | | US | 2021013493 A1 | 14-01-2021 |

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175700

- KR 1020240175704